Europäisches Patentamt

European Patent Office

Office européen des brevets

(11) Veröffentlichungsnummer: **0 213 067 B1**

(12) **EUROPÄISCHE PATENTSCHRIFT**

(45) Veröffentlichungstag der Patentschrift: **15.01.92**

(21) Anmeldenummer: **86810221.1**

(22) Anmeldetag: **22.05.86**

(51) Int. Cl.⁵: **G02B 6/38**

(54) **Verfahren und Vorrichtung zum Zentrieren des Kerns einer Lichtleitfaser in einem Lichtleiterendstück.**

(30) Priorität: **20.06.85 CH 2611/85**

(43) Veröffentlichungstag der Anmeldung:
**04.03.87 Patentblatt 87/10**

(45) Bekanntmachung des Hinweises auf die
Patenterteilung:
**15.01.92 Patentblatt 92/03**

(84) Benannte Vertragsstaaten:
**AT BE CH DE FR GB IT LI LU NL SE**

(56) Entgegenhaltungen:
**EP-A- 0 094 906**
**WO-A-82/01077**
**DE-A- 2 704 140**
**US-A- 3 902 784**

**PATENT ABSTRACTS OF JAPAN, Band 2, Nr.
4 (E-77)[9854], 12. Januar 1978; & JP-A-52 119
238 (HITACHI SEISAKUSHO K.K.) 10-06-1977**

**REVIEW OF THE ELECTRIAL COMMUNICA-
TION LABORATORIES, Band 26, Nr. 5-6, Mai-
Juni 1978, Seiten 693-700, Tokyo, JP; N. SU-
ZUKI et al.: "New connectors for an experimental optical fiber transmission system"
Figur 8**

(73) Patentinhaber: **DIAMOND S.A.**
**Via dei Patrizi 5**
**CH-6616 Losone-Locarno(CH)**

(72) Erfinder: **Gerber, Hans**
**Via dei Colli 6**
**CH-6648 Minusio(CH)**
Erfinder: **Marazzi, Silvio**

**CH-6554 Cavigliano(CH)**

(74) Vertreter: **Wenger, René et al**
**Hepp & Partner AG Marktgasse 18**
**CH-9500 Wil(CH)**

## Beschreibung

Die Erfindung bezieht sich auf ein Verfahren gemäss dem Oberbegriff von Anspruch 1, sowie auf eine Vorrichtung zur Durchführung des Verfahrens. Mit derartigen Verfahren soll eine optimale Positionierung der Lichtleitfaser im Lichtleiterendstück erreicht werden, um in der Steckverbindung ein Maximum an Licht von einem Kern zum anderen zu übertragen.

Jede Lichtleitfaser besteht aus einem lichtleitenden Kern und aus einem den Kern umgebenden Mantel. Da der Kern, bedingt durch die Herstellung, nicht absolut konzentrisch zum Aussenmantel der Lichtleitfaser verläuft, wird in optischen Steckverbindungen eine Kern-Kern-Positionierung angestrebt, da diese die kleinste Dämpfung aufweist. Es sind bereits verschiedene Verfahren bekannt, um den Kern einer Lichtleitfaser relativ zur äusseren Begrenzungsfläche eines Steckers zu zentrieren. So beschreibt beispielsweise der Aufsatz "New Connectors for an Experimental Optical Fiber Transmission System" in Review of the Electrical Communication, Volume 26, Nr. 5/6 1978 von Suzuki und Koyama ein Verfahren, bei dem die Lichtleitfaser im Zentrum einer Steckerhülse mit einem Manipulator verstellbar ist. Die Stirnseite der Steckerhülse mit dem darin gehaltenen Faserende wird mit einem Mikroskop betrachtet, welches ein Bild der Stirnseite auf einen Bildschirm überträgt. Der Bildschirm ist mit einem Fadenkreuz bzw. mit konzentrischen Ringen versehen, welche das Zentrum der Steckerhülse markieren. Der Manipulator wird solange betätigt, bis das Zentrum des Faserkerns auf dem Bildschirm koaxial mit den Markierungen verläuft. Nun wird der Zwischenraum zwischen der Steckerhülse und der justierten Lichtleitfaser mit einem Epoxyharz ausgefüllt.

Ein ganz ähnliches Verfahren ist auch in der DE-A-27 04 140 beschrieben. Zum Betrachten des Faserkerns im Mikroskop wird vorzugsweise Licht in die Lichtleitfaser eingespeist.

Die genannten Verfahren sind sowohl bezüglich des Zeitaufwandes als auch der erforderlichen Hilfsmittel relativ aufwendig und taugen daher nicht für eine feldmässige Montage eines Steckers. Bei einer feldmässigen Montage müssen die Stecker auch unter schwierigen Bedingungen bei minimalsten Dämpfungsverlusten montiert werden können. Zu diesem Zweck haben sich Lichtleiterendstücke als besonders geeignet erwiesen, bei denen die Lichtleitfaser in eine möglichst zentrische Bohrung an der Stirnseite des Lichtleiterendstückes eingeschoben wird. Die Zentrierung erfolgt mit Hilfe eines ringförmigen Stauchwerkzeuges, welches konzentrisch zur Faser gegen die plastisch verformbare Stirnseite gepresst wird. Als Referenzfläche für das Stauchwerkzeug dient dabei der hochpräzise Aussenmantel des Lichtleiterendstückes. Durch die so entstehende ringförmige Prägung wird die Lichtleitfaser zentriert und gleichzeitig in der Bohrung fixiert. Ein derartiges Zentrierverfahren ist in der EP-A-94 906 der Anmelderin beschrieben.

Bei diesem bekannten Zentrierverfahren der Lichtleitfaser durch Materialstauchung können die Toleranzschwankungen der Zentrizität des Faserkerns nicht berücksichtigt werden. Diese Abweichung kann jedoch 3 bis 4 $\mu$m betragen, was bei Fasern mit hoher Uebertragungskapazität bereits zu spürbaren Dämpfungsverlusten führen kann.

Es ist daher eine Aufgabe der Erfindung, das Prägeverfahren zum Zentrieren einer Lichtleitfaser in einem Lichtleiterendstück derart zu verbessern, dass unter feldmässigen Bedingungen ohne aufwendige Hilfsmittel eine Kern-Kern-Positionierung der Faser möglich ist. Diese Aufgabe wird in verfahrensmässiger Hinsicht durch ein Verfahren mit den Merkmalen in Anspruch 1 und in vorrichtungsmässiger Hinsicht durch eine Vorrichtung mit den Merkmalen in Anspruch 3 gelöst.

Das Nachprägen mit dem segmentförmigen Stauchwerkzeug in der bereits bestehenden ringförmigen Prägung erlaubt ersichtlicherweise eine Positionierung des Kerns allein durch einseitige Deformation des die Lichtleitfaser umgebenden Materials. Die Justiervorrichtung kann ohne weiteres für einen feldmässigen Einsatz mitgeführt werden.

Die Relativlage des Faserkerns wird auf einfachste Weise dadurch ermittelt, dass das Lichtleiterendstück in der Justiervorrichtung um die Mittelachse gedreht wird, wobei die Bewegung des Faserkerns über eine zum Lichtleiterendstück koaxiale Markierung beobachtet wird. Verläuft der Faserkern nicht konzentrisch mit der Mittelachse des Lichtleiterendstückes, so führt er eine planetoide Drehbewegung um diese Mittelachse aus. Durch Drehen des Lichtleiterendstückes um wenigstens 180° kann somit ermittelt werden, wieviel nachjustiert werden muss, bis der Kern im Zentrum des Lichtleiterendstückes liegt. Möglicherweise muss der Nachjustiervorgang wiederholt werden, um optimale Werte zu erzielen.

Die Vorrichtung zur Durchführung des Verfahrens zeichnet sich durch ihre einfache Bauweise und die effiziente Funktion aus. Durch die Verschiebung des Stempels mit dem Prägesegment in der hochpräzisen Bohrung ist eine absolut achsparallele Führung des Prägewerkzeuges gewährleistet. Der Nachprägevorgang kann dadurch rationalisiert werden, dass unter der Büchse eine Einspannvorrichtung zur drehbaren Aufnahme des Lichtleiterendstückes angeordnet ist und dass der Stempel drehfest in der Bohrung gelagert ist. Die Einspannvorrichtung dient beim Nachprägen mit dem Stempel als Widerlager für den Prägevorgang. Sie erlaubt gleichzeitig ein leichtes Drehen des Lichtleiterendstücks in der Büchse. Da der Stempel drehfest in der Bohrung gelagert ist, erfolgt die Prägung relativ zur Büchse immer an der gleichen Stelle. Das Lichtleiterendstück wird in der Bohrung jeweils so positioniert, dass derjenige Sektor der ringförmigen Vorprägung unter das Prägesegment zu liegen kommt, in dem eine Exzentrizität des Faserkerns festgestellt wurde. Durch die immer gleichbleibende Position des Prägesegmentes wird die Handhabung der Justiervorrichtung wesentlich erleichtert.

Der Stempel ist vorzugsweise mit einer Pressvorrichtung verschiebbar, die über der Büchse gegen die Vorspannkraft einer Feder etwa achsparallel zur Achse der Bohrung verschiebbar ist. Eine besonders vorteilhafte Funktion der Justiervorrichtung wird erreicht, wenn die Pressvorrichtung eine obere und eine untere Platte aufweist, wobei die Platten an einem Ende kraftschlüssig miteinander verbunden sind und sich etwa quer zur Achse der Bohrung erstrecken, wenn die freien Enden der Platten mit einer Gewindespindel aufspreizbar sind, und wenn das freie Ende der unteren Platte beim Aufspreizen auf den Stempel in der Bohrung pressbar ist. Die Ausbildung der Pressvorrichtung als Platten erlaubt eine Einleitung der Kraft auf den Stempel über einen etwa quer zur Stempelachse verlaufenden Hebel. Durch das Aufspreizen der Platten kann die Kraft zum Prägen bzw. die Eindringtiefe genau dosiert werden, wobei die beiden einseitig verbundenen Platten als Feder wirken.

Die Justiervorrichtung ist vorteilhaft derart unter dem Objektiv eines Mikroskops angeordnet, dass die Achse der Bohrung auf der optischen Achse des Mikroskops liegt, welche durch ein Fadenkreuz bestimmt ist.

Wenn der Stempel sowie alle zwischen Stempel und Objektiv liegenden Teile mit einer durchgehenden Bohrung versehen sind, kann der Nachprägevorgang durch das Mikroskop verfolgt werden. Dadurch wird ein Wiederholen des Nachprägevorgangs bis zum Erreichen des optimalen Wertes vermieden, da die Bedienungsperson am Mikroskop unmittelbar mitverfolgen kann, wie sich beim Betätigen der Justiervorrichtung der Faserkern verschiebt.

Wenn der Stempel und die Büchse, in welcher sich der Stempel bewegt, aus Hartmetall gefertigt sind, kann eine äusserst hohe und gleichbleibende Präzision erhalten werden.

Wenn das Lichtleiterendstück eine Zentrierhülse aus relativ hartem Material aufweist, welche das Kernteil aus plastisch verformbarem Material umgibt, können in der Steckverbindung gleichbleibend optimale Dämpfungswerte aufrechterhalten werden, wenn die Stirnseite des Lichtleiterendstückes wenigstens ausserhalb der ringförmigen Prägung derart angeschrägt ist, dass die Zentrierhülse relativ zur Ebene des Faserendes etwas zurückversetzt ist. Da das Kernteil und die Zentrierhülse aus unterschiedlichen Materialien gefertigt sind, haben diese Teile auch unterschiedliche Wärmeausdehnungskoeffizienten. Bei einer absolut plan verlaufenden Stirnseite am Lichtleiterendstück kann dies zur folge haben, dass sich die äussere Zentrierhülse des Steckers mehr ausdehnt als das Kernteil, in dem die Lichtleitfaser fixiert und zentriert ist. Berühren sich in der Steckverbindung jeweils die Stirnflächen der beiden Zentrierhülsen, so könnten ersichtlicherweise die aufeinanderliegenden Enden der Faserkerne etwas zurückversetzt werden, so dass zwischen den benachbarten Lichtleitfasern eine Zwischenraum von wenigen Tausendstel Millimetern entstünde. Dies hätte bereits eine Dämpfung durch die so entstehende Fresnel'sche Reflexion zur Folge. Durch die Anschrägung der Stirnseite erhält diese eine kegelstumpfförmige Konfiguration mit einem äusserst stumpfen Winkel. Ersichtlicherweise wird dadurch die stirnseitige Begrenzungsfläche der Zentrierhülse relativ zur Stirnseie des Kerteils etwas zurückversetzt, so dass zwei einander gegenüberliegende Lichtleiterendstücke in der Kupplung sich nur mit den Fasern bzw. mit den diese umgebenden Kernteilen berühren. Eine Dilatation durch Wärmeausdehnung an den Zentrierhülsen bleibt somit ohne Wirkung auf die einander berührenden Lichtleitfasern.

Ein Ausführungsbeispiel der Erfindung ist in den Zeichnungen dargestellt und wird nachstehend genauer beschrieben. Es zeigen:

| | |
|---|---|
| Figur 1 | ein Lichtleiterendstück ohne die das Endstück umgebenden Steckerteile, |
| Figur 2 | eine Draufsicht auf einen Stempel mit Prägesegment, |
| Figur 3 | einen Querschnitt durch den Stempel gemäss Figur 2, |
| Figur 4 | einen Querschnitt durch die Stirnseite des Lichtleiterendstücks gemäss Figur 1 in nochmals vergrössertem Massstab, |
| Figur 5 | einen Querschnitt durch eine Justiervorrichtung, |
| Figur 6 | eine Draufsicht auf die Vorrichtung gemäss Figur 5, |
| Figur 7 | eine Seitenansicht der Justiervorrichtung gemäss Figur 6 aus Pfeilrichtung A, |
| Figur 8 | ein Mikroskop mit der aufmontierten Justiervorrichtung gemäss den Figuren 5 bis 7, |
| Figur 9 | eine Draufsicht auf die Stirnseite eines Lichtleiterendstückes in stark vergrössertem und unproportionalem Massstab. |

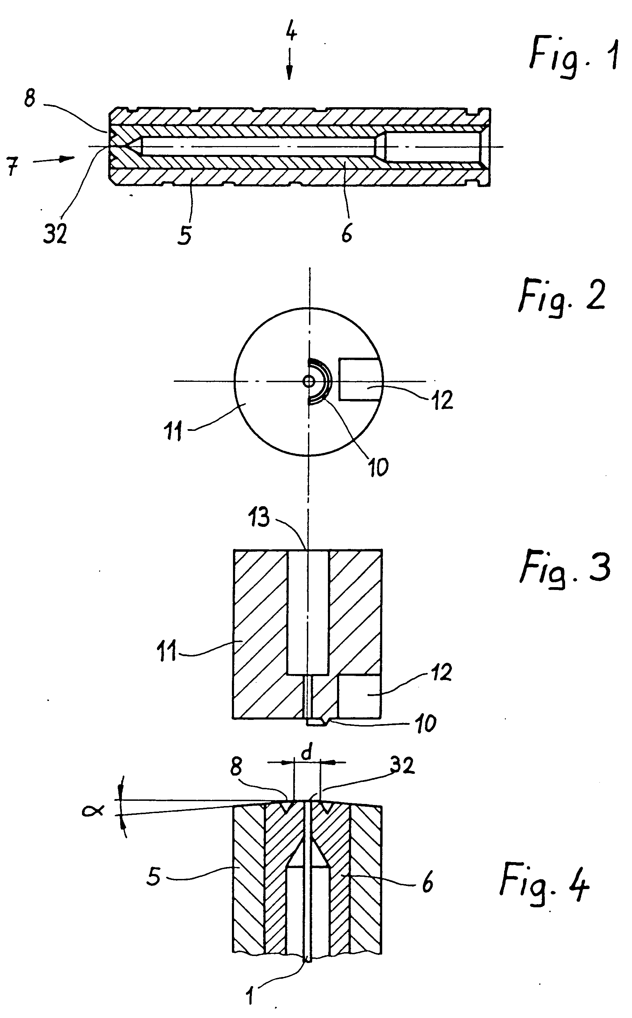

Figur 1 zeigt ein bekanntes Lichtleiterendstück 4 bestehend aus einer Zentrierhülse 5, vorzugsweise aus Hartmetall, und aus einem Kernteil 6 aus plastisch verformbarem Material. Das Kernteil 6 besteht vorzugsweie aus einer Buntmetall-Legierung, wie z.B. Kupfernickel. An der Stirnseite 7 ist eine Bohrung 32 angebracht, welche nur geringfügig grösser ist als die hier nicht dargestellte Lichtleitfaser. Ebenfalls nicht dargestellt sind die das Lichtleiterendstück umgebenden Steckerteile wie z.B. Halteröhrchen, Ueberwurfmutter usw.

Wie insbesondere aus Figur 4 ersichtlich ist, wird die Lichtleitfaser 1 an der Stirnseite dadurch fixiert und zentriert, dass mit einem ringförmigen Stauchwerkzeug, welches exakt konzentrisch zur Aussenfläche des Lichtleiterendstückes geführt wird, eine die Lichtleitfaser umgebende Prägung 8 im Kernteil 6 angebracht wird. Die Prägung 8 bewirkt nicht nur eine Verengung der Bohrung 32, sondern auch eine zentrische Positionierung der Lichtleitfaser 1. Dieses an sich bekannte und in der genannten Vorpublikation der Anmelderin beschriebene Vorprägeverfahren berücksichtigt jedoch eine allfällige Exzentrizität des Faserkerns innerhalb der Lichtleitfaser nicht.

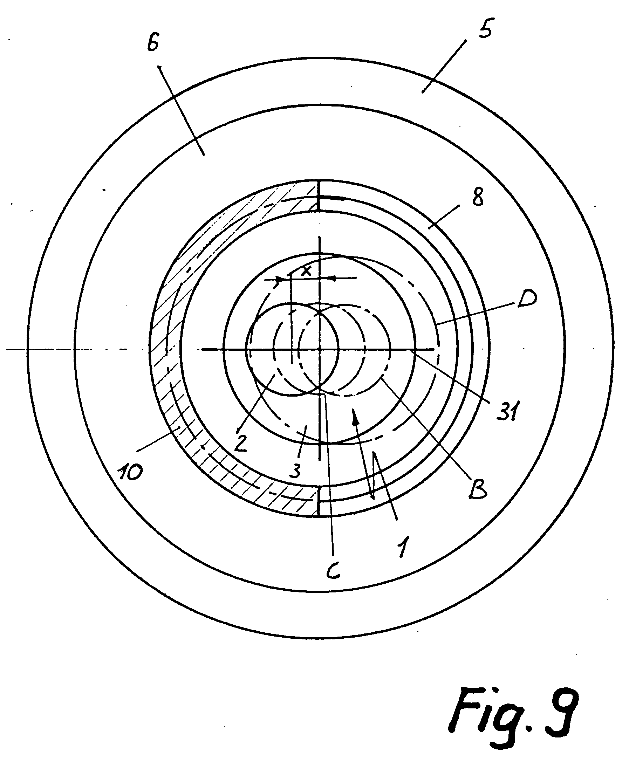

Es ist daher eine Nachprägung erforderlich, deren Wirkungsweise besonders anschaulich in Figur 9 dargestellt ist. Bei einer frontalen Draufsicht auf die Stirnseite 7 des Lichtleiterendstücks erkennt man wiederum die Zentrierhülse 5 und das Kernteil 6. Im Zentrum liegt die Lichtleifaser 1, welche von der sie umgebenden ringförmigen Prägung 8 zentriert und fixiert ist. Aus Gründen der besseren Uebersichtlichkeit wurden die Proportionen der einzelnen Masse zueinander bewusst nicht eingehalten. So beträgt beispielsweise der Aussendurchmesser des in Figur 1 dargestellten Lichtleiterendstücks in Wahrheit 3,5 mm, während die Bohrung 32 an der Stirnseite nur einen Durchmesser von beispielsweise weniger als 0,2 mm haben kann.

Wie in Figur 9 dargestellt, besteht die Lichtleitfaser 1 aus einem lichtleitenden Kern 2 und aus dem den Kern umgebenden Mantel 3. Im vorliegenden Fall ist der Kern 2 nicht im Zentrum der Lichtleitfaser 1 angeordnet, sondern um die Distanz X exzentrisch verschoben. Diese exzentrische Verschiebung kann beim vergrösserten Betrachten der Stirnseite dadurch ermittelt werden, dass das Lichtleiterendstück um die Mittelachse gedreht wird. Bei einer Verdrehung um 180° führt der Kern 2 eine planetoide Bewegung um das Zentrum aus und nimmt die mit dem Bezugszeichen B dargestellte Position ein. Das Zentrum wird dabei beim Betrachten durch das Mikroskop durch ein Fadenkreuz 31 markiert, so dass eine Exzentrizität des Kerns 2 besonders einfach festgestellt werden kann.

Um den Kern 2 ins Zentrum zu bringen, wird ein Prägesegment in die bereits bestehende ringförmige Prägung 8 eingesetzt, und zwar in dem Sektor der Prägung, in dem die Exzentrizität festgestellt wurde. Das Prägesegment 10 ist in der Darstellung 9 als schraffierte Fläche dargestellt und erstreckt sich über einen Winkel von 180°. Das Prägesegment muss ersichtlicherweise derart in die Prägung 8 angesetzt werden, dass die Gerade, welche durch das Zentrum des Faserkerns 2 und des Lichtleiterendstücks 4 geht, mit der Winkelhalbierenden des Prägesegments zusammenfällt. Beim Einpressen des Prägesegments 10 in die Prägung 8 bewegt sich die Lichtleitfaser 1 mit ihrem Kern 2 gegen das Zentrum des Lichtleiterendstücks, bis der Kern 2 die mit dem Bezugszeichen C markierte zentrische Position einnimmt. Ersichtlicherweise bewirkt dies auch eine Verschiebung des Mantels 3, dessen neue Position bei zentriertem Kern mit dem Bezugszeichen D versehen ist.

Das eigentliche Prägewerkzeug ist in den Figuren 2 und 3 dargestellt. Es besteht aus einem zylindrischen Stempel 11, an dessen einer Stirnseite das Prägesegment 10 angeordnet ist. Das Prägesegment 10 kann sich über einen Winkel von 180° oder über einen kleineren Winkel erstrecken. Der Stempel 11 ist mit einer durchgehenden Bohrung 13 versehen, welche beim Prägen den Blick auf die Stirnseite der Lichtleitfaser 1 freigibt. Zur Verdrehsicherung des Stempels in der Justiervorrichtung ist dieser mit einem Führungsschlitz 12 versehen.

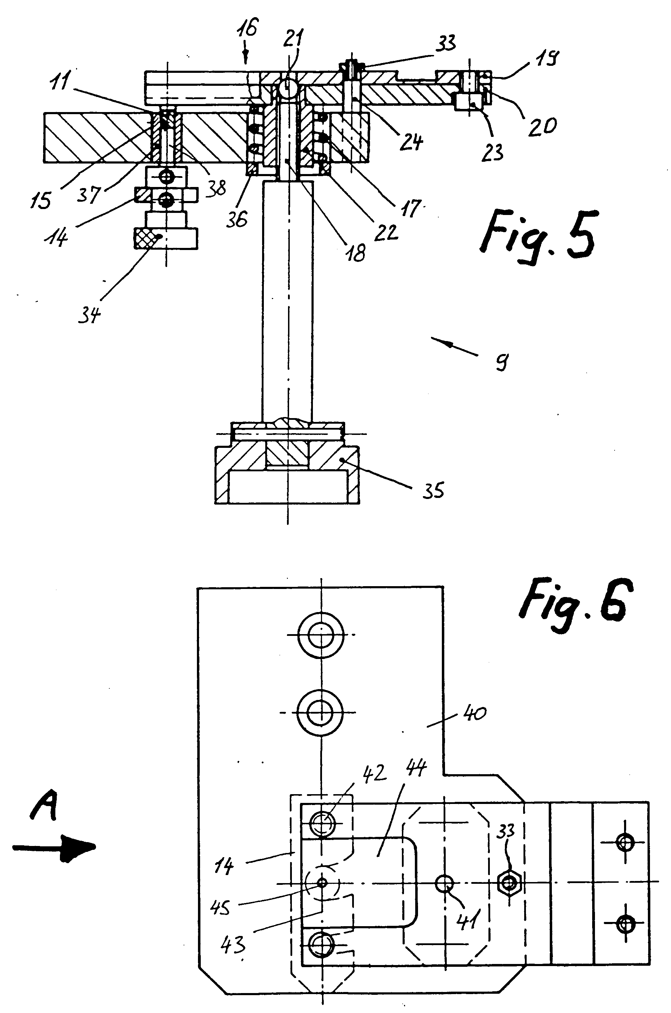

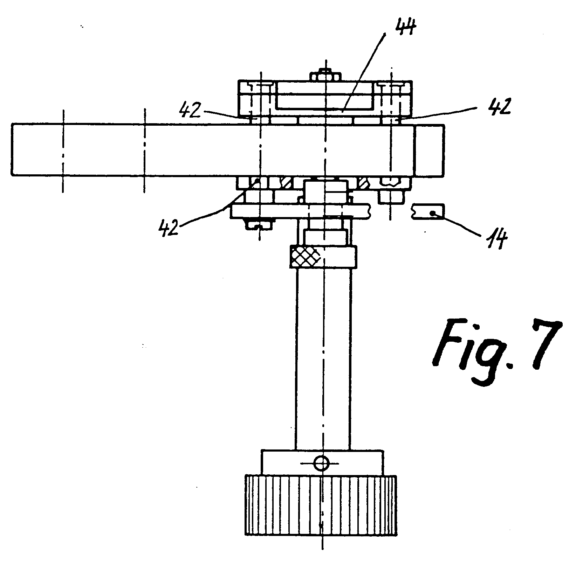

Die Wirkungsweise der Justiervorrichtung in einer bevorzugten Ausführungsform wird nachstehend anhand der Figuren 5 bis 7 erläutert. Die Justiervorrichtung 9 besteht aus einer Einspannplatte 40, an welcher die Justiervorrichtung beispielsweise unter ein Mikroskop eingespannt werden kann. In der Einspannplatte ist eine Büchse 37 mit einer hochpräzisen Bohrung 38 zur Aufnahme eines Lichtleiterendstücks angeordnet. Der Innendurchmesser dieser Bohrung ist derart dimensioniert, dass ein Lichtleiterendstück gerade noch passgenau eingeschoben werden kann. Das Lichtleiterendstück wird in einem Drehknopf 34 fixiert, der in einer Einspannvorrichtung 14 drehbar gelagert ist. Die Einspannvorrichtung 14 dient somit als Widerlager zur Aufnahme der Reaktionskraft beim Prägen. Im oberen Bereich der Büchse 37 ist der Stempel 11 axial verschiebbar gelagert. Ein Führungsnocken 15 greift in den Führungsschlitz 12 des Stempels 11 ein, so dass dieser drehfest in der Bohrung 38 gelagert ist.

Der Stempel 11 wird durch eine Pressvorrichtung 16 betätigt, die sich plattenförmig etwa parallel zur Einspannplatte 40 erstreckt. Die Pressvorrichtung 16 besteht aus einer oberen Platte 19 und aus einer unteren Platte 20. Beide Platten sind an einem Ende mittels Schrauben 23 kraftschlüssig miteinander verbunden. Die beiden Platten sind an einem Führungsbolzen 24 an der Einspannplatte 40 gelagert, wobei der obere Anschlag durch eine Haltemutter 33 festgelegt werden kann. Die beiden Platten werden durch eine Feder 17 nach oben gespannt, die sich an einer Federhalterung 36 abstützt. Die obere Platte 19 ist mittels Führungsstiften 42 mit der Einspannvorrichtung 14 durch die Einspannplatte 40 hindurch verbunden. Bei dieser Anordnung nimmt die obere Platte 19 beim Pressen die Reaktionskräfte über die Einspannvorrichtung auf. Die Feder 17 spannt somit auch noch die Einspannvorrichtung 14 nach oben, wobei das eingespannte Lichtleiterendstück in der Bohrung 38 gehalten wird.

Von der unteren Platte 20 erstreckt sich eine Gewindebüchse 22 nach unten, in welche die Gewindespindel 18 einer Prägeschraube 35 eingeschraubt ist. Die Gewindebohrung in der Gewindebüchse 22 ist im oberen Bereich konisch angeschrägt, wobei im konischen Einlaufabschnitt eine Kugel 21 liegt. Die Kugel 21 stützt sich an der oberen Platte 19 im Randbereich einer Bohrung 41 ab. Im Bereich des Stempels 11 ist die untere Platte 20 an Führungsstiften 42 verschiebbar geführt. Sowohl in der unteren Platte als auch in der oberen Platte ist eine Aussparung 43 vorgesehen, welche ein möglichst nahes Heranführen des Objektivs an die zu beobachtende Stirnseite des Lichtleiterendstückes erlaubt.

Auch im relativ dünnwandigen Abschnitt 44 der unteren Platte 20, der auf den Stempel 11 gepresst wird, ist eine Bohrung 45 angebracht. Der Stempel 11 selbst ist nicht mit der unteren Platte 20 verbunden, sondern liegt nur durch den Führungsnocken 15 gehalten in der Bohrung 38.

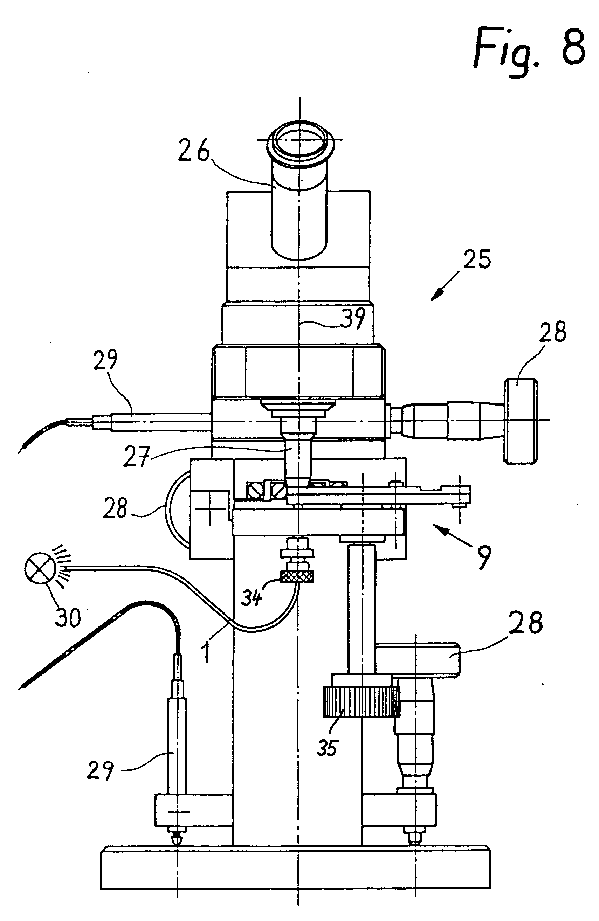

Wie in Figur 8 dargestellt, wird die Justiervorrichtung 9 gemäss den Figuren 5 bis 7 an einem Mikroskop 25 eingespannt. Die Befestigung erfolgt dabei derart, dass die Mittelachse der Bohrung 38 in der Büchse 37 mit der optischen Achse 39 des Mikroskops zusammenfällt. Die Position des Objektivs 27 kann in den drei Achsen über Stellschrauben 28 festgelegt werden, wobei jeder Achse eine Messonde 29 zum Ermitteln des zurückgelegten Weges zugeordnet ist. Zur Vorbereitung des Prägevorgangs wird das Lichtleiterendstück 4 in die Bohrung 38 eingeschoben und in der Einspannvorrichtung 14 drehbeweglich fixiert. In die Lichtleitfaser 1 wird über eine Lichtquelle 30 Licht eingespeist. Blickt man durch das Okular des Mikroskops, so sieht man - allerdings in den richtigen Proportionen - etwas das in Figur 9 dargestellte Bild.

Für die Kernpositionierung wird nun wie folgt vorgegangen: Das Lichtleiterendstück wird in der Büchse 37 mit Hilfe des Drehknopfes 34 gedreht.

Stellt man dabei keine exzentrische Bewegung des Kerns 2 relativ zum Fadenkreuz 31 fest, so verläuft der Kern 2 bereits koaxial zur Mittelachse des Lichtleiterendstückes und ein Nachprägen ist nicht erforderlich. Wird beim Drehen eine exzentrische Bewegung des Kerns 2 festgestellt, so wird der Kern 2 relativ zum feststehenden Prägesegment 10 in die richtige Position gebracht. Das Prägesegment 10 ist selbstverständlich im Mikroskop nicht sichtbar. Es ist jedoch denkbar, zusätzlich zum Fadenkreuz eine optische Markierung anzubringen, welche dem Betrachter die Lage des Prägesegments bzw. dessen Winkelhalbierende, auf welcher beim Nachprägen die Verschiebung stattfindet, anzeigt.

Ist der Kern 2 in die richtige Relativlage gedreht, so wird langsam an der Prägeschraube 35 gedreht. Die Gewindespindel 18 bewegt sich dabei in der Gewindebüchse 22 nach oben und presst die Kugel 21 gegen die Bohrung 41. Da die beiden Platten 19 und 20 nur an einem Ende miteinander verbunden sind, können sie unter Krafteinwirkung aufgespreizt werden. Da die Relativbewegung der oberen Platte 19 durch die Führungsstifte 42 begrenzt ist, wird die untere Platte 20 unter dem Druck der Kugel 21 und gegen die Kraft der Feder 17 nach unten aufgespreizt, wobei primär die beiden Platten, z.B. aus Metal gefertigt, eine Federwirkung ausüben. Die Kugel 21 bewirkt dabei eine gleichmässige Kraftverteilung. Durch diese Aufspreizbewegung wird der Stempel 11 in der Bohrung 38 nach unten damit gegen die Stirnseite des eingespannten Lichtleiterendstücks gepresst. Das Prägesegment 10, dessen Querschnittskonfiguration etwa derjenigen der bereits bestehenden Vorprägung 8 angepasst ist, bewirkt nun im plastisch verformbaren Material des Kernteils 6 eine einseitige Deformation und damit ein Verschieben der Position der Lichtleitfaser 1 mit ihrem Kern 2.

Da sowohl der Stempel 11 als auch die untere Platte 20 mit einer Bohrung versehen sind, kann die Verschiebung im Mikroskop mitverfolgt werden. An der Prägeschraube 35 wird solange gedreht, bis der Kern 2 konzentrisch zum Fadenkreuz 31 verläuft. Mit einer Kontrolldrehung am Drehknopf 34 kann überprüft werden, ob der Kern 2 nach dem Prägevorgang keine exzentrische Drehbewegung mehr ausführt. War die Prägung zu stark, so muss in die entgegengesetzte Richtung nochmals korrigiert werden.

Selbstverständlich sind auch andere Ausführungsformen der Justiervorrichtung denkbar. Insbesondere könnte das Bild der Stirnseite des Lichtleiterendstücks auf einen Bildschirm übertragen werden. Es wäre auch denkbar, die Exzentrizität des Kerns durch Messung des aus dem Kern austretenden Lichtstrahles in der optischen Achse festzustellen.

Wie in Figur 4 dargestellt, wird die Stirnseite 7 des Lichtleiterendstücks in einem Winkel α zur Stirnseite angeschrägt. Der Winkel α kann z.B. etwa 2° betragen. Die umlaufende Anschrägung geht nicht vom Zentrum, sondern von einer Kreisfläche mit dem Durchmesser d aus, welche plan verbleibt. Ersichtlicherweise wird so die Zentrierhülse 5 relativ zum Faserende in der Ebene der Stirnfläche etwas zurückversetzt, so dass sich die miteinander gekoppelten Lichtleiterendstücke nur mit den Kernteilen berühren.

## Patentansprüche

1. Verfahren zum Zentrieren des Kerns (2) einer Lichtleitfaser (1) in einem Lichtleiterendstück (4), bei dem das Faserende wenigstens an der Stirnseite (7) von einem plastisch verformbaren Material umgeben ist, wobei zum Vorzentrieren der Lichtleitfaser relativ zur Mittelachse des Lichtleiterendstückes zuerst ein ringförmiges, die Lichtleitfaser konzentrisch umgebendes Stauchwerkzeug gegen die Stirnseite gepresst wird, so dass die so entstehende ringförmige Prägung (8) die Lichtleitfaser fixiert und zentriert, dadurch gekennzeichnet, dass das Lichtleiterendstück (4) mit der vorzentrierten Lichtleitfaser (1) in eine Justiervorrichtung (9) eingespannt wird und dass Licht in die Lichtleitfaser eingespeist wird, dass die Relativlage des Faserkerns (2) zur Mittelachse des Lichtleiterendstückes mit Hilfe des aus dem Faserkern austretenden Lichtbündels ermittelt wird, und dass beim Feststellen einer Abweichung ein segmentförmiges Stauchwerkzeug (10, 11) so tief in die bestehende ringförmige Prägung (8) gepresst wird, bis der Faserkern koaxial mit dem Lichtleiterendstück (4) verläuft, wobei das segmentförmige Stauchwerkzeug in jenem Sektor der ringförmigen Prägung angesetzt wird, in dem eine Exzentrizität des Faserkerns (2) festgestellt wird.

2. Verfahren nach Anspruch 1, dadurch gekennzeichnet, dass zum Ermitteln der Relativlage des Faserkerns das Lichtleiterendstück (4) in der Justiervorrichtung (9) um die Mittelachse gedreht wird, wobei die Bewegung des Faserkerns (2) über eine zum Lichtleiterendstück koaxiale Markierung beobachtet wird.

3. Stauchwerkzeug zur Verwendung bei dem Verfahren nach Anspruch 1, dadurch gekennzeichnet, dass sie eine Büchse (37) mit einer hochpräzisen Bohrung (38) zur drehbaren Aufnahme des Lichtleiterendstückes (4) aufweist und dass in der Bohrung (38) ein Stempel (11) mit einem Prägesegment (10) axial verschiebbar angeordnet ist.

4. Stauchwerkzeug nach Anspruch 3, dadurch gekennzeichnet, dass unter der Büchse (37) eine Einspannvorrichtung (14) zur drehbaren Aufnahme des Lichtleiterendstücks (4) angeordnet ist, und dass der Stempel (10) drehfest in der Bohrung (38) gelagert ist.

5. Stauchwerkzeug nach Anspruch 4, dadurch gekennzeichnet, dass der Stempel (10) mittels einer Pressvorrichtung (16) verschiebbar ist, die über der Büchse (37) gegen die Vorspannkraft einer Feder (17 bzw. 19, 20) etwa achsparallel zur Achse der Bohrung (38) verschiebbar ist.

6. Stauchwerkzeug nach Anspruch 5, dadurch gekennzeichnet, dass die Pressvorrichtung (16) eine obere und eine untere Platte (19, 20) aufweist, wobei die Platten an einem Ende kraftschlüssig miteinander verbunden sind und sich etwa quer zur Achse der Bohrung (38) erstrecken, dass die freien Enden der Platten mit einer Gewindespindel (18) aufspreizbar sind, dass das freie Ende der unteren Platte (20) beim Aufspreizen auf den Stempel (11) in der Bohrung (38) pressbar ist, und dass das freie Ende der oberen Platte (19) zur Aufnahme der Reaktionskräfte mit der Einspannvorrichtung (14) verbunden ist.

7. Stauchwerkzeug nach Anspruch 6, dadurch gekennzeichnet, dass eine Feder (17) die Pressvorrichtung mit der Einspannvorrichtung bis zu einem Anschlag nach oben presst.

8. Stauchwerkzeug nach einem der Ansprüche 3 bis 7, dadurch gekennzeichnet, dass sie derart unter dem Objektiv (27) eines Mikroskops (25) angeordnet ist, dass die Achse der Bohrung (38) auf der optischen Achse (39) des Mikroskops liegt, welche durch eine Markierung (31) bestimmt ist.

9. Stauchwerkzeug nach Anspruch 8, dadurch gekennzeichnet, dass zum unmittelbaren Beobachten des Nachprägevorgangs der Stempel (11) und alle zwischen Stempel und Objektiv liegenden Teile mit einer durchgehenden Bohrung (13) versehen sind.

10. Stauchwerkzeug nach einem der Ansprüche 3 bis 9, dadurch gekennzeichnet, dass der Stempel (11) und die Büchse (37) aus Hartmetall gefertigt sind.

## Claims

1. A method of centering the core (2) of an optical fibre (1) in a light guide end portion (4), in which the fibre end is enclosed at least at the end face (7) by a plastically deformable material, wherein for pre-centering of the optical fibre relative to the centre line of the light guide end portion firstly an annular upsetting tool which concentrically surrounds the optical fibre is pressed against the end face so that the resulting annular impression (8) fixes and centres the optical fibre, characterised in that the light guide end portion (4) with the pre-centered optical fibre (1) is claps into an adjusting apparatus and that light is passed into the optical fibre, that the relative position of the fibre core (2) with respect to the centre line of the light guide end portion is ascertained by means of the light beam issuing from the fibre core and that, when a deviation is detected, a segment-shaped upsetting tool (10, 11) is pressed into the listing annular impression (8) so deeply until the fibre core extends coaxially with the light guide end portion (4), the segment-shaped upsetting tool being applied in that sector of the annular impression in which eccentricity of the fibre core (2) is detected.

2. A method according to claim 1 characterised in that, for the purposes of ascertaining the relative position of the fibre core the light guide end portion (4) is turned in the adjusting apparatus (9) about the centre line, the movement of the fibre core (2) being observed by way of a marking which is coaxial with respect to the light guide end portion.

3. An upsetting tool for use in the method according to claim 1 characterised in that it has a sleeve (37) with a high-precision bore (38) for rotatably receiving the light guide end portion (4) and that a punch (11) with an impressing segment (10) is axially displaceably arranged in the bore (38).

4. An upsetting tool according to claim 3 characterised in that a clamping means (14) for rotatably receiving the light guide end portion (4) is arranged beneath the sleeve (37) and that the punch (10) is non-rotatably mounted in the bore (38).

5. An upsetting tool according to claim 4 characterised in that the punch (10) is displaceable by means of a pressing device (16) which is displaceable by way of the sleeve (37) against the prestressing force of a spring (17 or 19, 20) in substantially axis-parallel relationship relative to the axis of the bore (38).

6. An upsetting tool according to claim 5 characterised in that the pressing device (16) has an upper and a lower plate (19, 20), wherein the plates are force-lockingly connected together at one end and extend substantially transversely relative to the axis of the bore (38), that the free ends of the plates can be spread apart with a screwthreaded spindle (18), that the free end of the lower plate (20), in the spreading operation, can be pressed against the punch (11) in the bore (38) and that the free end of the upper plate (19) is connected to the clamping means (14) to carry the reaction forces.

7. An upsetting tool according to claim 6 characterised in that a spring (17) presses the pressing device with the clamping means upwardly to an abutment.

8. An upsetting tool according to one of claims 3 to 7 characterised in that it is arranged beneath the objective lens (27) of a microscope (25) in such a way that the axis of the bore (38) lies on the optical axis (39) of the microscope, which is defined by a marking (31).

9. An upsetting tool according to claim 8 characterised in that for direct viewing of the post-impression operation the punch (11) and all parts between the punch and the objective lens are provided with a bore (13) extending therethrough.

10. An upsetting tool according to one of claims 3 to 9 characterised in that the punch (11) and the sleeve (37) are made from hard metal.

**Revendications**

1. Procédé de centrage du noyau (2) d'une fibre optique (1) dans un embout (4) de fibre optique, dans lequel l'extrémité de la fibre est, au moins sur sa face frontale (7), entourée par un matériau plastiquement déformable, procédé selon lequel, pour précentrer la fibre optique par rapport à l'axe médian de l'embout de fibre optique, on presse tout d'abord un outil à refouler, de forme annulaire et entourant concentriquement la fibre optique, contre la face frontale, pour que l'empreinte annulaire (8) qui apparaît ainsi fixe et centre la fibre optique, procédé caractérisé par le fait que l'on bride l'embout (4) de fibre optique, avec la fibre optique (1) précentrée, dans un dispositif d'ajustement (9) et que l'on envoie de la lumière dans la fibre optique, que l'on établit la position relative du noyau (2) de la fibre optique par rapport à l'axe médian de l'embout de la fibre optique à l'aide du faisceau lumineux sortant du noyau de la fibre optique et que, pour déterminer un écart, on presse un outil à refouler, en forme de segment (10,11), assez profondément dans l'empreinte annulaire existante (8) pour que le noyau de la fibre s'oriente coaxialement à l'embout (4) de la fibre optique, étant précisé que l'on introduit l'outil à refouler en forme de segment dans le secteur de l'empreinte annulaire dans lequel on a déterminé une excentricité du noyau (2) de la fibre.

2. Procédé selon la revendication 1, caractérisé par le fait que pour établir la position relative du noyau de la fibre, on fait tourner, autour de l'axe médian, l'embout (4) de la fibre optique dans le dispositif d'ajustement (9), le mouvement du noyau (2) de la fibre étant observé par l'intermédiaire d'un repère coaxial à l'embout de la fibre optique.

3. Outil à refouler destiné à être utilisé dans le procédé selon la revendication 1, caractérisé par le fait qu'il présente une fourrure (37), avec un perçage de haute précision (38), pour recevoir, avec liberté de rotation, l'embout (4) de la fibre optique et que dans le perçage (38) est disposé, avec liberté de coulissement axial, un poinçon (11) comportant un segment d'estampage (10).

4. Outil à refouler selon la revendication 3, caractérisé par le fait que, sous la fourrure (37), est disposé un dispositif de bridage (14) pour recevoir, avec liberté de rotation, l'embout (4) de la fibre optique et que le poinçon (10) est monté, en étant bloqué en rotation, dans le perçage (38).

5. Outil à refouler selon la revendication 4, caractérisé par le fait que le poinçon (10) est déplaçable en translation au moyen d'un dispositif de pressage (16) qui peut coulisser, avec son axe sensiblement parallèle à l'axe du perçage (38), au-dessus de la fourrure (37), à l'encontre de la force de précontrainte d'un ressort (17 ou 19,20).

6. Outil à refouler selon la revendication 5, caractérisé par le fait que le dispositif de pressage (16) présente une plaque supérieure et une plaque inférieure (19,20), étant précisé que les plaques sont reliées l'une à l'autre à une extrémité par la pression et s'étendent à peu près transversalement à l'axe du perçage (38), que les extrémités libres des plaques peuvent être écartées l'une de l'autre au moyen d'une tige filetée (18), que, lors de cet écartement, l'extrémité libre de la plaque inférieure (20) peut presser sur le poinçon (11) qui se trouve dans le perçage (38), et que l'extrémité libre de la plaque supérieure est reliée au dispositif de bridage (14) pour reprendre les forces de réaction.

7. Outil à refouler selon la revendication 6, caractérisé par le fait qu'un ressort (17) presse vers le haut, jusqu'à une butée, le dispositif de pressage avec le dispositif de bridage.

8. Outil à refouler selon l'une des revendications 3 à 7, caractérisé par le fait qu'il est disposé, sous l'objectif (27) d'un microscope (25), de façon que l'axe du perçage (38) se trouve sur l'axe optique (39) du microscope, qui est déterminé par un repère (31).

9. Outil à refouler selon la revendication 8, caractérisé par le fait que, pour permettre une observation directe du processus de reprise d'estampage, le poinçon (11) et toutes les pièces qui se trouvent entre le poinçon et l'objectif présentent un perçage transversant (13).

10. Outil à refouler selon l'une des revendications 3 à 9, caractérisé par le fait que le poinçon (11) et la fourrure (37) sont fabriqués en un métal dur.

Fig. 1

Fig. 2

Fig. 3

Fig. 4

Fig. 5

Fig. 6

Fig. 7

EP 0 213 067 B1

*Fig. 8*

12

Fig. 9